# EUROPÄISCHE PATENTSCHRIFT

(11) **EP 1 358 278 B1**
(45) Veröffentlichungstag und Bekanntmachung des Hinweises auf die Patenterteilung: **16.08.2006**
(21) Anmeldenummer: 01986925.4
(22) Anmeldetag: 20.12.2001
(51) Int. Cl.: C09D 5/36, C09D 7/12, C09D 5/02, C09D 5/38

(54) **WÄSSRIGER, EFFEKTGEBENDER BESCHICHTUNGSSTOFF, VERFAHREN ZU SEINER HERSTELLUNG UND SEINE VERWENDUNG**
AQUEOUS, EFFECT-PRODUCING COATING MATERIAL, METHOD FOR THE PRODUCTION THEREOF AND USE OF THE SAME
MATERIAU DE REVETEMENT A EFFET, AQUEUX, SON PROCEDE DE PRODUCTION ET SON UTILISATION

(30) Priorität: 04.01.2001 DE 10100195
(43) Veröffentlichungstag der Anmeldung: 05.11.2003
(73) Patentinhaber: BASF Coatings AG, 48165 Münster (DE)
(72) Erfinder: WEGNER, Egon, 48268 Greven (DE); JANSING, Frank, 88 Henan Central Road 200002 SHANGHAI (CN)
(86) Internationale Anmeldenummer: PCT/EP2001/015174
(87) Internationale Veröffentlichungsnummer: WO 2002/053658

(56) Entgegenhaltungen:
- WO-A-95/15361
- US-A- 4 522 655
- PATENT ABSTRACTS OF JAPAN vol. 1998, no. 10, 31. August 1998 (1998-08-31) & JP 10 120936 A (ASAHI KASEI METALS KK), 12. Mai 1998 (1998-05-12)

## Beschreibung

Die vorliegende Erfindung betrifft einen neuen, wäßrigen, effektgebenden Beschichtungsstoff, insbesondere einen Metallic-Wasserbasislack. Außerdem betrifft die vorliegende Erfindung ein Verfahren zur Herstellung des neuen, wäßrigen, effektgebenden Beschichtungsstoffs. Des weiteren betrifft die vorliegende Erfindung die Verwendung des neuen, wäßrigen, effektgebenden Beschichtungsstoffs für die Herstellung ein- oder mehrschichtiger, effektgebender Lackierungen.

Wäßrige, effektgebende Beschichtungsstoffe, insbesondere Metallic-Wasserbasislacke, speziell Metallic-Wasserbasislacke auf Polyurethanbasis, sind beispielsweise aus den Patentanmeldungen EP 0 089 497 A 1, EP 0 256 540 A 1, EP 0 260 447 A 1, EP 0 297 576 A1, WO 96/12747, EP 0 523 610 A 1, EP 0 228 003 A 1, EP 0 397 806 A 1, EP 0 574 417 A 1, EP 0 531510 A 1, EP 0 581211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1 oder EP 0 817 684, Spalte 5, Zeilen 31 bis 45, bekannt. Sie dienen vor allem der Herstellung effektgebender Mehrschichtlackierungen nach dem Naß-in-naß-Verfahren, bei dem der Metallic-Wasserbasislack auf ein Substrat appliziert und die resultierende Naßschicht getrocknet, indes nicht gehärtet wird. Die resultierende Basislackschicht wird anschließend mit einem Klarlack überschichtet, wonach Basislackschicht und Klarlackschicht gemeinsam gehärtet werden. Sie können aber auch zur Herstellung von Unidecklackierungen verwendet werden.

Bei der Applikation und der Härtung der wäßrigen, effektgebenden Beschichtungsstoffe kann es zur Bildung von sogenannten Wolken, d. h. von Hell-Dunkel-Schattierungen, kommen. Diese sind ein Hinweis auf Mängel der Dispergierung und/oder Orientierung der effektgebenden Pigmente, insbesondere der Metalleffektpigmente, in der Lackierung. Wolkige Lackierungen werden aber gerade bei besonders hochwertigen Produkten, die großflächige Lackierungen aufweisen, wie beispielsweise Automobile, grundsätzlich nicht akzeptiert, weil solche Lackstöningen den Eindruck minderer Qualität des Gesamtprodukts (z. B. Automobil) erwecken.

Zwar ist es bekannt, daß die Wolkigkeit bis zu einem gewissen Grad durch die Zugabe von Aerosil-, Talkum-, Weiß- oder Mattierungspasten zu den wäßrigen, effektgebenden Beschichtungsstoffen verringert werden kann, indes hat der Zusatz solcher Pasten häufig eine nachteilige Wirkung auf den Farbton (Farbtonverschiebung) und den Metalliceffekt (Verringerung).

Aufgabe der vorliegenden Erfindung ist es, einen neuen, wäßrigen, effektgebenden Beschichtungsstoff bereitzustellen, der die Nachteile des Standes der Technik nicht mehr länger aufweist, sondern der ein- und mehrschichtige, effektgebende Lackierungen liefert, die keine oder eine erheblich geringere Hell-Dunkel-Schattierung (Wolken) als die Lackierungen des Standes der Technik aufweisen, und darüber hinaus zu einem verbesserten Metalliceffekt führt und die Gasungsstabilität der Effektpigmente verbessert. Dabei sollen die neuen, wäßrigen, effektgebenden Beschichtungsstoffe und die hieraus hergestellten neuen, ein- und mehrschichtigen, effektgebenden Lackierungen ansonsten weiterhin das vorteilhafte Eigenschaftsprofil der bekannten, wäßrigen, effektgebenden Beschichtungsstoffe und der hieraus hergestellten ein- und mehrschichtigen, effektgebenden Lackierungen haben, wenn nicht gar dieses übertreffen. Des weiteren sollen die neuen, wäßrigen, effektgebenden Beschichtungsstoffe in einfacher Weise mit Hilfe üblicher und bekannter Ausgangsprodukte bei möglichst geringfügiger stofflicher Abwandlung der bekannten Beschichtungsstoffen erhältlich sein, so daß sie in vorhandenen Vorrichtungen hergestellt, gehandhabt, appliziert und gehärtet werden können.

Außerdem-war-es die Aufgabe der vorliegenden Erfindung ein neues Verfahren zur Herstellung von wäßrigen, effektgebenden Beschichtungsstoffen zu finden, das bei möglichst geringfügiger Abwandlung der bekannten Verfahren zur Herstellung solcher Beschichtungsstoffe neue, wäßrige, effektgebende Beschichtungsstoffe liefert, die für die Herstellung von ein- und mehrschichtigen, effektgebenden, völlig oder im wesentlichen wolkenfreien Lackierungen geeignet sind.

Demgemäß wurde der neue, wäßrige, effektgebende Beschichtungsstoff gefunden, enthaltend mindestens ein in Wasser lösliches oder dispergierbares Bindemittel,
- mindestens ein Effektpigment und
- ein neutralisiertes Gemisch aus mindestens zwei Fettsäuren.

Im folgenden wird der neue wäßrige, effektgebende Beschichtungsstoff als "erfindungsgemäßer Beschichtungsstoff' bezeichnet.

Außerdem wurde das neue Verfahren zur Herstellung des erfindungsgemäßen Beschichtungsstoffs gefunden, bei dem man
(I) das Effektpigment oder die Effektpigmente in einem Gemisch, enthaltend
   - mindestens ein wassermischbares organisches Lösemittel,
   - mindestens ein in Wasser lösliches oder dispergierbares Bindemittel und
   - ein neutralisiertes Gemisch aus mindestens zwei Fettsäuren;
   dispergiert,
(II) wonach man die resultierende Dispersion (I) mit der wäßrigen Lösung oder Dispersion mindestens eines in Wasser löslichen oder dispergierbaren Bindemittels vereinigt.

Im folgenden wird das neue Verfahren zur Herstellung des erfindungsgemäßen Beschichtungsstoffs als " erfindungsgemäßes Verfahren" bezeichnet.

Weitere erfindungsgemäße Gegenstände gehen aus der Beschreibung hervor.

Bei den optischen Effekten, die der erfindungsgemäße Beschichtungsstoff hervorruft, handelt es sich vorzugsweise um Metallic-Effekte und/oder dichroitische optische Effekte, insbesondere aber Metallic-Effekte (vgl. Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«).

Der erimdungsgemäße Beschichtungsstoff enthält mindestens ein in wasserlösliches oder dispergierbares Bindemittel.

Die Bindeinittel können physikalisch, thermisch oder thermisch und mit aktinischer Strahlung härtbar sein. Letzteres wird von der Fachwelt auch als »Dual-Cure« bezeichnet.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Sind die Bindemittel thermisch härtbar, können sie thermisch fremdvernetzend oder selbstvernetzend, insbesondere fremdvernetzend, sein. Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthaltend sind, die für eine thermische Vernetzung notwendig sind, oder reaktive funktionelle Gruppen, die "mit sich selbst" reagieren können. Als fremdvernetzend werden dagegen solche Bindemittel bezeichnet, worin die eine Art von komplementären reaktiven funktionellen Gruppen, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung wie Elektronenstrahlung zu verstehen.

Die Bindemittel sind oligomere und polymere Harze. Unter Oligomeren werden Harze verstanden, die mindestens 2 bis 15 Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Beispiele für geeignete Bindemittel sind statistisch, alternierend und/oder blockartig aufgebaute lineare' und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate, speziell polyurethanmodifizierte (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharze, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester und Polyurethane.

Die selbstvernetzenden thermisch härtbaren oder Dual-Cure-Bindemittel enthalten reaktive funktionelle Gruppen, die mit Gruppen ihrer Art oder mit komplementären reaktiven funktionellen Gruppen Vernetzungsreaktionen eingehen können. Die fremdvernetzenden thermisch härtbaren oder Dual-Cure-Bindemittel enthalten reaktive funktionelle Gruppen, die mit komplementären reaktiven funktionellen Gruppen, die in Vernetzungsmitteln vorliegen, Vernetzungsreaktionen eingehen können. Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R und R" stehen für gleiche oder verschiedene aliphatische Reste oder sind miteinander zu einem aliphatischen oder heteroäliphatischen Ring verknüpft.

**Übersicht: Beispiele komplementärer funktioneller Gruppen**

| **Bindemittel und Vernetzungsmittel** | |
|---|---|
| **oder** | |
| **Vernetzungsmittel und Bindemittel** | |
| -SH | -C(O)-OH |
| -NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| >NH | -CH₂-O-R |
| | -NH-CH₂-O-R |
| | -NH-CH₂-OH |
| | -N(-CH₂-O-R)₂ |
| | -NH-C(O)-CH(-C(O)OR)₂ |
| | -NH-C(O)-CH(-C(O)OR)(-C(O)-R) |
| | -NH-C(O)-NR'R" |
| | > Si(OR)₂ |
| | 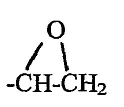 |
| | 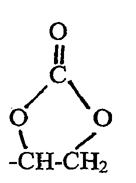 |
| -C(O)-OH | 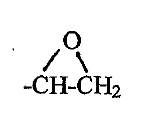 |
| | -C(O)-N(CH₂-CH₂-OH)₂ |

Die Auswahl der jeweiligen komplementären Gruppen richtet sich zum einen danach, daß sie bei der Herstellung, der Lagerung und der Applikation der erfindungsgemäßen Beschichtungsstoffe keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Beschichtungsstoffen Vernetzungstemperaturen von 60 bis 180°C angewandt.

Hierbei werden bei Mehrkomponentensystemen, insbesondere Zweikomponentensystemen, in denen die Bindemittel bis kurz vor der Applikation getrennt von den Vernetzungsmitteln gelagert werden, Vernetzungstemperaturen von 60 bis 100°C angewandt. Es werden vorzugsweise Bindemittel mit Thio-, Hydroxyl-, primären und sekundären Amino- sowie die Iminogruppen und Vernetzungsmittel mit freien Isocyanatgruppen eingesetzt.

Bei den Einkomponentensystemen, in denen die Bindemittel mit den Vernetzungsmitteln vorliegen, werden vorzugsweise Vernetzungstemperaturen über 100°C angewandt.

Es werden daher vorzugsweise Bindemittel mit Thio-, Hydroxyl-, N-Methylolamino- N-Allcoxymethylamino-, Imino-, Carbamat-, Allophanat-, Epoxy- oder Carboxylgruppen, bevorzugt Hydroxyl- oder Epoxidgruppen, insbesondere Epoxidgruppen, einerseits und vorzugsweise Vernetzungsmittel mit Anhydrid-, Carboxyl-, Epoxid-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxid-, Hydroxy-, beta-Hydroxyalkylamid-, unblockierte Isocyanat-, Urethan- oder Alkoxymethylaminogruppen, andererseits angewandt.

Im Falle selbstvernetzender Bindemittel werden insbesondere Methylol-, Methylolether- und/oder N-Alkoxymethylaminogruppen verwendet.

Die Bindemittel enthalten funktionelle Gruppen, die sie wasserdispergierbar und/oder wasserlöslich machen. Dies sind entweder
(f1) funktionelle Gruppen, die durch Neutralisationsmittel und/oder Quaternisierungsmittel in Kationen überführt werden können, oder
(f2) funktionelle Gruppen, die durch Neutralisationsmittel in Anionen überführt werden können, und/oder anionische Gruppen und/oder
(f3) nichtionische hydrophile Gruppen, insbesondere Poly(alkylenether)-Gruppen.

Beispiele geeigneter funktioneller Gruppen (f1), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter kationischer Gruppen (f1) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Sulfoniumgruppen.

Beispiele geeigneter funktioneller Gruppen (f2), die durch Neutralisationsmittel in Anionen überführt werden können, sind Carbonsäure-, Sulfonsäure- oder Phosphönsäuregruppen, insbesondere Carbonsäuregruppen.

Beispiele geeigneter anionischer Gruppen (f2) sind Carboxylat-, Sulfonat- oder Phosphonatgruppen, insbesondere Carboxylatgruppen.

Beispiele geeigneter Neutralisationsmittel für in Kationen umwandelbare funktionelle Gruppen (f1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (f2) sind Ammoniak, Amine oder Aminoalkohole, wie z.B. Trimethylamin, Triethylamin, Tributylamin, Dibutylamin Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin oder Triethanolamin. Bevorzugt wird als Neutralisationsmittel Dimethylethanolamin, Dibutylamin und/oder Triethylamin eingesetzt.

Die vorstehend beschriebenen komplementären reaktiven funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Beispiele geeigneter olefinisch ungesättigter Monomere mit reaktiven funktionellen Gruppen, durch die diese Gruppen in die (Meth)Acrylatcopolymerisate eingeführt werden können, sind
(a1) Monomere, welche mindestens eine Hydroxyl-, Amino-, Alkoxymethylamino-, Carbamat-, Allophanat- oder Iminogruppe pro Molekül tragen wie
   - Hydroxyalkylester der Acrylsäure, Methacrylsäure oder einer anderen alpha,beta-olefmisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexän-, Octahydro-4,7-methano-1 H-inden-dimethanol- oder Methylpropandiolmonoacrylat, -monomethacrylat, -monoethacrylat, -monocrotonat, -monomaleinat, -monofumarat oder -monoitaconat; Umsetzungsprodukte aus cyclischen Estern, wie z.B. epsilon-Caprolacton und diesen Hydroxyalkyl- oder -cycloalkylestern;
   - olefinisch ungesättigte Alkohole wie Allylalkohol;
   - Polyole wie Trimethylolpropanmono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomenje Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide wie (Meth)Acrylsäureamid, N-Methyl-, . N-Methylol-, N,N-Diniethylol-, N-Methoxymethyl-, N,N-Di(methoxymethyl)-, N-Ethoxymethyl- und/oder N,N-Di(ethoxyethyl)-(meth)acrylsäureamid;
   - Acryloyloxy- öder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US 3,674,838 A, US 4,126,747 A, US 4,279,833 A oder US 4,340,497 A beschrieben;
a2) Monomere, welche mindestens eine Säuregruppe pro Molekül tragen, wie
   - Acrylsäure, Methacrylsäure, Ethacrylsäure, Crotonsäure, Maleinsäure, Fumarsäure oder Itaconsäure;
   - olefmisch ungesättigte Sulfon- oder Phosphonsäuren oder deren Teilester;
   - Maleinsäuremono(meth)acryloyloxyethylester, Bemsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
a3) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen, es sei denn, man will gezielt vernetzte polymere Mikroteilchen herstellen.

Beispiele geeigneter Monomere zur Einführung reaktiver funktioneller Gruppen in Polyester oder Polyester-Polyurethane sind 2,2-Dimethylolethyl- oder - propylamin, die mit einem Keton blockiert sind, wobei die resultierende Ketoximgruppe nach dem Einbau wieder hydrolysiert wird; oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure, 2,2-Dimenthylolpentansäure, ###,###-Diaminovaleriansäure, 3,4-Diaminobenzoesäure, 2,4-Diaminotoluolsulfonsäure oder 2,4-Diaminodiphenylethersulfonsäure.

Ein Beispiel zur Einführung reaktiver funktioneller Gruppen über polymeranaloge Reaktionen ist die Umsetzung Hydroxygruppen enthaltender Harze mit Phosgen, wodurch' Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A, US 4,301,257 A oder US 2,979,514 A bekannt.

Die Dual-Cure-Bindemittel enthalten desweiteren im statistischen Mittel mindestens eine, vorzugsweise mindestens zwei, Gruppe(n) mit mindestens einer mit aktinischer Strahlung aktivierbaren Bindung(en) pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanatund/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Im Falle der Polyurethane und der Polyester können die Gruppen mit Hilfe von Verbindungen, die mindestens eine, insbesondere eine, der vorstehend beschriebenen isocyanatreaktiven oder säurereaktiven funktionellen Gruppen und mindestens eine, insbesondere eine, mit aktinischer Strahlung aktivierbare Bindung enthalten, eingeführt werden. Beispiele geeigneter Verbindungen dieser Art sind
- 2-Hydroxyethyl-, 2-Hydroxypropyl-, 3-Hydroxypropyl-, 3-Hydroxybutyl-, 4-Hydroxybutyl-, Bis(hydroxymethyl)cyclohexan-, Neopentylglykol-, Diethylenglykol-, Dipropylenglykol-, Dibutylenglykol-, Triethylenglykolacrylat, -methacrylat, -ethacrylat, -crotonat, -cinnamat, - vinylether, -allylether, -dicyclopentadienylether, -norbomenylether, - isoprenylether, -isopropenylether oder -butenylether;
- Trimethylolpropanmono-, Glycerinmono-, Trimethylolethamnono-, Pentaerythritmono-, Homopentaerythritmono-, Pentaerythritdi-, Homopentaerythritdi-, Trimethylolpropandi-, Glycerindi-, Trimethylolethandi-, Pentaerythrittri- oder Homopentaerythrit-triacrylat, - methacrylat, -ethacrylat, -crotonat, -cinnamat, -vinylether, -allylether, - dicyclopentadienylether, -norbornenylether, -isoprenylether, - isopropenylether oder -butenylether; oder
- Umsetzungsprodukte aus cyclischen Estern, wie z.B. epsilon-Caprolacton, und den vorstehend beschriebenen hydroxylgruppenhaltige Monomeren; oder
- 2-Aminoethyl(meth)acrylat und/oder 3-Aminopropyl(meth)acrylat.

Die vorstehend beschriebenen Bindemittel sind übliche und bekannte Verbindungen und werden beispielsweise im Detail den Patentanmeldungen EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A1, EP 0 574 417 A 1, EP 0 531 510 A 1, EP 0 581 211 A 1, EP 0 708 788 A 1, EP 0 593 454 A 1, DE-A-43 28 092 A 1, EP 0 299 148 A1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1, EP 0 817 684, Spalte 5, Zeilen 31 bis 45, DE 44 37 535 A 1, Seite 7, Zeile 8, bis Seite 8, Zeile 49, EP 0 787 195 A 1, DE 40 05 961 A 1, DE 41 10 520 A 1, EP 0 752 455 B 1, DE 198 55 455 B 1, DE 199 488 121 A 1, DE 198 469 171 A 1, EP 0 788 523 B 1 oder WO 95/12626 beschrieben.

Der Gehalt des erfindungsgemäßen Beschichtungsstoffs an den vorstehend beschriebenen Bindemitteln und den nachstehend beschriebenen Vernetzungsmitteln kann sehr breit variieren. Vorzugsweise liegt der Gehalt bei, jeweils bezogen auf den Festkörper des erfindungsgemäßen Beschichtungsstoffs, 10 bis bis 90, bevorzugt 15 bis 80, besonders bevorzugt 20 bis 80, ganz besonders bevorzugt 25 bis 80 und insbesondere 30 bis 80 Gew.-%.

Der erfindungsgemäße Beschichtungsstoff enthält außerdem mindestens ein Effektpigment.

Beispiele geeigneter Effektpigmente sind Metallic-Effektpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist, flüssigkristalline Effektpigmente oder fluoreszierende Pigmente (Tagesleuchtpigmente) wie Bis(azomethin)-Pigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804A1,DE3930601A1,EP0068311A1,EP0264843A1,EP0265820 A 1, EP 0 283 852 A 1, EP 0 293 746 A 1, EP 0 417 567 A 1, US 4,828,826 A oder US 5,244,649 A verwiesen.

Vorzugsweise werden Metallic-Effektpigmente verwendet, insbesondere Aluminiumeffektpigmente (vgl. Römpp Lexikon Lacke und Druckfarben, Georg Thieme Verlag, 1998, Seiten 24 und 25, »Aluminium-Pigmente«), verwendet.

Die Aluminiumeffektpigmente sind Leafing-Pigmente (vgl. Römpp Lexikon Lacke und Druckfarben, Georg Thieme Verlag, 1998, Seite 351, »Leafing-Pigmente«) oder Non-Leafing-Pigmente (vgl. Römpp Lexikon Lacke und Druckfarben, Georg Thieme Verlag, 1998, Seite 412, »Non-Leafing-Pigmente«). Sie sind von plättchenförmiger, im wesentlichen runder Form (Silberdollar-Typ) oder von plättchenförmiger, im wesentlichen länglicher Form (Cornflake-Typ).

Der Gehalt des erfindungsgemäßen Beschichtungsstoffs an Effektpigment oder Effektpigmenten kann sehr breit variieren und richtet sich zum einen nach dem Deckvermögen des Effektpigments und nach der Intensität des optischen Effekts, den man erzielen will. Vorzugsweise enthält der erfindungsgemäße Beschichtungsstoff, jeweils bezogen auf seinen Festkörpergehalt, 0,1 bis 50, bevorzugt 0,5 bis 40, besonders bevorzugt 1 bis 40, ganz besonders bevorzugt 1,5 bis 35 und insbesondere 2 bis 30 Gew.-% an Effektpigment oder Effektpigmenten.

Der erfindungsgemäße Beschichtungsstoff enthält außerdem ein neutralisiertes Gemisch aus mindestens zwei Fettsäuren. Vorzugsweise sind diese aus der Gruppe, bestehend aus den Fettsäuren mit 6 bis 30 Kohlenstoffatomen im Molekül, ausgewählt. Beispiele geeigneter Fettsäuren sind Capronsäure, Önanthsäure, Caprylsäure, Pelargonsäure, Caprinsäure, Undedylsäure, Laurinsäure, Myristinsäure, Palmitinsäure, Stearinsäure, Ölsäure, Elaidinsäure, Arachinsäure, Behensäure, Lignocerinsäure, Cerotinsäure und Melissinsäure.

Als Neutralisationsmittel wird mindestens eine Base, ausgewählt aus der Gruppe, bestehend aus primären, sekundären und tertiären, aromatischen, aliphatischen und cycloalipahtischen Mono- oder Poylaminen, Aminoalkoholen und Ammoniak, verwendet. Beispiele geeigneter Neutralisationsmittel sind die vorstehend beschriebenen Neutralisationsmittel für in Anionen umwandelbare funktionelle Gruppen (f2). Vorzugsweise werden sie im Überschuß anwendet. Bevorzugt werden 0,7 bis 2, insbesondere 1,1 bis 1,5 Equ. Base pro 1 Equ. Säure eingesetzt.

Vorzugsweise enthält der erfindungsgemäße Beschichtungsstoff das neutralisierte Fettsäuregemisch in einer Menge von, bezogen auf das Effektpigment, 0,5 bis 10, bevorzugt 0,8 bis 8, besonders bevorzugt 1 bis 6, ganz besonders bevorzugt 1,2 bis 5 und insbesondere 1,4 bis 4 Gew.-%.

Darüber hinaus kann der erfindungsgemäße Beschichtungsstoff übliche und bekannte farbgebende, elektrisch leitfähige oder magnetisch abschirmende Pigmente, lösliche Farbstoffe und/oder Füllstoffe enthalten.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtifangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 1 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für geeignete elektrisch leitfähige Pigmente sind Titandioxid/Zinnoxid-Pigmente.

Beispiele für geeignete magnetisch abschirmende Pigmente sind Pigmente auf der Basis von Eisenoxiden oder Chromdioxid.

Geeignete lösliche organische Farbstoffe sind lichtechte organische Farbstoffe mit einer geringen oder nicht vorhandenen Neigung zur Migration aus den erfindungsgemäßen Beschichtungsstoffen und den hieraus hergestellten Beschichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrylnitril. Ergänzend wird auf Römpp Lexikon Lacke und Druckfarben, Georg Thieme Verlag, 1998, Seiten 250 ff., »Füllstoffe«, verwiesen.

Es ist kann von Vorteil sein, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten gut eingestellt werden können.

Die vorstehend beschriebenen Pigmente, Farbstoffe und Füllstoffe können in feinverteilter, nicht deckender Form vorliegen.

Der erfindungsgemäße Beschichtungsstofkann desweiteren noch Zusatzstoffe wie wassermischbare organische Lösemittel, mit Wasser nicht oder nur in geringem Umfang mischbare Lösemittel, Nanopartikel, thermisch oder mit aktinischer Strahlung härtbare Reaktiverdünner, die vorstehend beschriebenen mit Wasser mischbaren und/oder mit Wasser nur in geringem Umfang mischbaren organischen Lösemittel, UV-Absorber, Lichtschutzmittel, Radikalfänger, thermolabile radikalische Initiatoren, Photoinitiatoren und -Coinitiatoren, Vernetzungsmittel, Katalysatoren für die thermische Vernetzung, Entlüftungsmittel, Slipadditive, Polymerisationsinhibitoren, Entschäumer, Emulgatoren, Netz- und Dispergiermittel, Haftvermittler, Verlaufinittel, filmbildende Hilfsmittel, rheologiesteuemde Additive (Verdicker), Flammschutzmittel, Sikkative, Trockungsmittel, Hautverhinderungsmittel, Korrosionsinhibitoren, Wachse und/oder Mattierungsmittel enthalten.

Geeignete wassermischbare organische Lösemittel sind lacktypische Lösemittel, die in jedem Verhältnis mit Wasser mischbar sind, wie Ethylenglykol, Propylenglykol, Butylglykol und deren Methyl-, Ethyl- oder Propylether, Ketone wie Aceton oder Diacetonalkohol, cyclische Ether wie Tetrahydrofuran oder Dioxan oder Amide wie N,N-Dimethylformamid oder N-Methylpyrrolidon (vgl. Paints Coatings and Solvents, Edit. Dieter Stoye und Werner Freitag, zweite Auflage, Wiley-VCH, und Weinheim, New York, 1998, Seiten 329 und 330).

Die in Wasser nicht oder in geringem Umfang mischbaren organischen Lösemittel nehmen bei 20°C, bezogen auf Wasser und Lösemittel, vorzugsweise weniger als 10; bevorzugt weniger als 9 und insbesondere weniger als 8 Gew.-% an Wasser auf. Umgekehrt nimmt Wasser bei 20°C, bezogen auf Wasser und Lösemittel, vorzugsweise weniger als 6, bevorzugt weniger als 5 und insbesondere weniger als 4 Gew.-% auf. Beispiele geeigneter in Wasser nicht oder in geringem Umfang mischbarer organischer Lösemittel sind Ketone wie Methylisobutylketon, Diisobutylketon, Cyclohexanon oder Trimethylcyclohexanon, Ether wie Dibutylether, Ester wie Isopropylacetat, Butylacetat, Ethylglykolacetat oder Butylglykolacetat oder höherer Alkohole wie Hexanol, Cyclohexanol, Trimethylcyclohexanol oder 2-Ethyl-1-hexanol (Isooctanol) (vgl. Paints Coatings and Solvents, Edit. Dieter Stoye und Werner Freitag, zweite Auflage, Wiley-VCH, und Weinheim, New York, 1998, Seiten 329 und 330).

Geeignete Nanopartikel sind insbesondere solche auf der Basis von Siliziumdioxid, Aluminiumoxid und Zirkoniumoxid mit einer Teilchengröße < 50 nm, die keinen Mattierungseffekt haben. Beispiele geeigneter Nanopartikel auf der Basis von Siliziumdioxid sind pyrogene Siliziumdioxide, welche unter dem Handelsnamen Aerosil® VP8200, VP721 oder R972 von der Firma Degussa oder dem Handelsnamen Cab O Sil® TS 610, CT 1110F oder CT 1110G von der Firma CABOT vertrieben werden. Im allgemeinen werden diese Nanopartikel in der Form von Dispersionen in mit aktinischer Strahlung härtbaren Monomeren, wie den nachstehend beschriebenen Reaktivverdünnern, vertrieben. Beispiele geeigneter Monomere, welche für den vorliegenden Verwendungszweck besonders gut geeignet sind, sind alkoxyliertes Pentaerythrit-tetra- oder - triacrylat, Ditrimethylolpropan-tetra- oder-triacrylat, Dineopentylglykoldiacrylat, Trimethylolpropantriacrylat, Trishydroxyethylisocyanurattriacrylat, Dipentaerythritpenta- oder - hexaacrylat oder Hexandioldiacrylat. Im allgemeinen enthalten diese Dispersionen die Nanopartikel in einer Menge von, jeweils bezogen auf die Dispersionen, 10 bis 80 Gew.-%, vorzugsweise 15 bis 70 Gew.-%, besonders bevorzugt 20 bis 60 Gew.-% und insbesondere 25 bis 50 Gew.-%. Ein Beispiel für eine besonders gut geeignete Dispersion von Nanopartikeln ist die Dispersion, welche unter dem Handelsnamen High Link® OG 103-31 von der Firma Clariant Hoechst vertrieben wird.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie beispielsweise in den deutschen Patentanmeldungen DE 198 05 421 A 1, DE 198 09 643 A 1 oder DE 198 40 405 A 1 beschrieben werden.

Beispiele geeigneter mit aktinischer Strahlung härtbarer Reaktiverdünner sind die in Römpp Lexikon Lacke und Druckfarben, Georg Thieme Verlag, Stuttgart, New York, 1998, auf Seite 491 unter dem Stichwort, »Reaktivverdünner«, oder in der Spalte 7, Zeilen 1 bis 26, der DE 198 18 715 A 1 beschriebenenen oder Reaktiverdünner mit mindestens 5, insbesondere 5, mit aktinischer Strahlung aktivierbaren Bindungen im Molekül wie beispielsweise Dipentaerythritolpentaacrylat.

Beispiele geeigneter thermolabiler radikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Dibutylzinndilaurat, Dibutylzinndioleat, Lithiumdecanoat, Zinkoctoat oder Bismutsalze wie Bismutlactat oder -dimethylolpropionat.

Beispiele geeigneter Photoinitiatoren und Coinitiatoren werden in Römpp Lexikon Lacke und Druckfarben, Georg Thieme Verlag Stuttgart, 1998, Seiten 444 bis 446, beschrieben.

Beispiele geeigneter Vernetzungsmittel, wie sie in Mehrkomponentensystem verwendet werden und die üblicherweise den Dispersionen (III) nachträglich zugesetzt werden, sind Polyisocyanate mit im-statistischen Mitteln mindestens 2,0, bevorzugt mehr als 2,0 und insbesondere mehr als 3,0 Isocyanatgruppen pro Molekül wie
- Diisocyanate wie Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Düsocyanatocyclopentan, 1,3-Diisocyanatocyclopentan, 1,2-Düsocyanatocyclohexan, 1,3-Diisocyanatocyclohexan, 1,4-Diisocyanatocyclohexan, Dicyclohexylmethan-2,4'-düsocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isoeyanatoprop-1-yl)cyclohexan, 1,2-, 1,4-oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es in den Patentanmeldungen DE 44 14 032 A 1, GB 1220717 A 1, DE 16 18 795 A 1 oder DE 17 93 785 A l beschrieben wird, bevorzugt Isophorondiisocyanat, 5-Isocyanato-1-(2-isocyanatoeth-1-yl)-1,3,3-trimethylcyclohexan, . 5-Isocyanato-1-(3-isocyanatoprop-1-yl)-1,3,3-trimethylcyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI;
- Isocyanurat-, Biuret-, Allophanat-, Iminooxadiazindion-, Urethan-, Hamstoff Carbodiimid und/oder Uretdiongruppen aufweisende Polyisocyanate, die in üblicher und bekannter Weise aus den vorstehend beschriebenen Diisocyanaten hergestellt werden; Beispiele geeigneter Herstellungsverfahren und Polyisocyanate sind beispielsweise aus den Patentschriften CA 2,163,591 A, US 4,419,513 A, US 4,454,317 A, EP 0 646 608 A, US 4,801,675 A, EP 0 183 976 A 1, DE 40 15 155 A 1, EP 0 303 150 A 1, EP 0 496 208 A 1, EP 0 524 500 A 1, EP 0 566 037 A 1, US 5,258,482 A, US 5,290,902 A, EP 0 649 806 A 1, DE 42 29 183 A 1 oder EP 0 531 820 A 1 bekannt; oder
- Dual-Cure-Polyisocyanate, die aus den vorstehend beschriebenen Polyisocyanaten und den vorstehend beschriebenen Verbindungen, die mindestens eine, insbesondere eine, der vorstehend beschriebenen isocyanatreaktiven oder säurereaktiven funktionellen Gruppen und mindestens eine, insbesondere eine, mit aktinischer Strahlung aktivierbare Bindung enthalten, hergestellt werden (vgl. z.B. die europäische Patentanmeldung EP 0 928 800 A 1).

Beispiele geeigneter Vernetzungsmittel, wie sie in Einkomponentensystemem verwendet werden, sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden; Carboxylgruppen enthaltende Verbindungen oder Harze, wie sie beispielsweise in der Patentschrift DE 196 52 813 A 1 beschrieben werden; Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden; blockierte Polyisocyanate, wie sie beispielsweise in den Patentschriften US 4,444,954 A, DE 196 17 086 A 1, DE 196 31 269 A 1, EP 0 004 571 A 1 oder EP 0 582 051 A 1 beschrieben werden; und/oder Tris(alkoxycarbonylamino)-triazine, wie sie in den Patentschriften US 4,939,213 A , US 5,084,541 A, US 5,288,865 A oder EP 0 604 922 A 1 beschrieben werden.

Beispiele für geeignete Entlüftunsmittel sind Diazadicycloundecan oder Benzoin.

Beispiele geeigneter Emulgatoren sind nicht ionische Emulgatoren, wie alkoxylierte Alkanole, Polyole, Phenole und Alkylphenole oder anionische Emulgatoren wie Alkalisalze oder Ammoniumsalze von Alkancarbonsäuren, Alltansulfonsäuren, und Sulfosäuren von alkoxylierten Alkanolen, Polyolen, Phenolen und Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler ist Tricyclodecandimethanol.

Beispiele für geeignete filmbildende Hilfsmittel sind Cellulose-Derivate wie Celluloseacetobutyrat (CAB).

Beispiele geeigneter rheologiesteuernder Additive (Verdicker) sind die aus den Patentanmeldungen WO 94/22968, EP 0 276 501 A 1, EP 0 249 201 A 1 oder WO 97/12945 bekannten; vernetzte polymere Mikroteilchen, wie sie beispielsweise in der EP 0 008 127 A 1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; insbesondere Kombinationen von ionischen und nicht ionischen Verdickern, wie sie in der Patentanmeldung DE 198 41 842 A 1 zu Einstellung eines strukturviskosen Verhaltens beschrieben werden; oder die Kombination von assoziativen Verdickern auf Polyurethanbasis und Netzmitteln auf Polyurethanbasis, wie sie in der deutschen Patentanmeldung DE 198 35 296 A 1 im Detail beschrieben wird.

Ein Beispiel für ein geeignetes Mattierungsmittel ist Magnesiumstearat.

Weitere Beispiele für die vorstehend aufgeführten Zusatzstoffe sowie Beispiele geeigneter UV-Absorber, Radikalfänger, Verlaufmittel, Flammschutzmittel, Sikkative, Trocknungsmittel, Hautverhinderungsmittel, Korrosionsinhibitoren und Wachse (B) werden in dem Lehrbuch »Lackadditive« von Johan Bieleman, Wiley-VCH, Weinheim, New York, 1998, im Detail beschrieben.

Die Herstellung des erfindungsgemäßen Beschichtungsstoffs kann nach allen auf dem Lackgebiet üblichen und bekannten Verfahren erfolgen. Beispielsweise können die vorstehend beschriebenen Ausgangsprodukte einzeln nacheinander oder alle auf einmal in einem geeigneten Mischaggregat, wie Rührkessel, Dissolver oder Ultraturrax zusammengegeben und miteinader vermischt werden. Das Vermischen wird so schonend durchgeführt, daß die jeweils verwendeten Effektpigmente nicht geschädigt werden. Es ist indes von Vorteil, den erfindungsgemäßen Beschichtungsstoff mit Hilfe des erfmdungsgemäßen Verfahrens durchzuführen.

Bei dem erfindungsgemäßen Verfahren wird in einem ersten Verfahrensschritt das Effektpigment oder die Effektpigmente in einem Gemisch, enthaltend
- mindestens ein wassermischbares organisches Lösemittel,
- mindestens ein in Wasser lösliches oder dispergierbares Bindemittel und
- ein neutralisiertes Gemisch aus mindestens zwei Fettsäuren;
dispergiert.

Beispiele geeigneter in Wasser löslicher oder dispergierbarer Bindemittel sind die vorstehend beschriebenen. Vorzugsweise werden wasserlösliche oder dispergierbare Polyester verwendet.

Geeignete Effektpigmente, wassermischbare organische Lösemittel und neutralisierte Fettsäuregemische sind die vorstehend beschriebenen.

Die in diesem Verfahrensschritt resultierende Dispersion (I) wird in einem zweiten Verfahrensschritt mit einer Dispersion (II) vereinigt. Die Dispersion (II) enthält mindestens eines der vorstehend beschriebenen, in Wasser löslichen oder dispergierbaren Bindemittel. Darüberhinaus kann die Dispersion (II) die vorstehend beschriebenen Pigmente, Füllstoffe und Zusatzstoffe enthalten.

Die Dispersionen (I) und (II) sind von einer solchen Zusammensetzung und werden in solchen Mengen eingesetzt, daß die vorstehend beschriebenen erfindungsgemäßen Beschichtungsstoffe resultieren.

Die Herstellung der Dispersionen (I) und (II) und ihre Vermischung bietet keine methodischen Besonderheiten, sondern erfolgt wie vorstehend beschrieben.

Der erfindungsgemäße Beschichtungsstoff ist für zahlreiche Anwendungen auf den Gebieten Automobilserienlackierung, der Autoreparaturlackierung, der Lackierung von Bauwerken im Innen- und Außenbereich, der Lackierung von Möbeln, Türen und Fenstern sowie der industriellen Lackierung, inklusive Container Coating und Coil Coating und der Beschichtung elektrotechnischer Bauteile, geeigmet. Dabei kann der erfindungsgemäße Beschichtungsstoff als Füller, Wasserbasislack oder Unidecklack, insbesondere aber als Wasserbasislack eingesetzt werden. Als Wasserbasislack dient er der Herstellung von erfindungsgemäßen effektgebenden Mehrschichtlackierungen nach dem Naß-in-naß-Verfahren.

Geeignete Subtrate bestehen aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien.

Im Falle elektrisch leitfähiger Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische, in Betracht.

Auf der Elektrotauchlackierung kann sich noch eine, aus einem üblichen und bekannten Füller hergestellte Füllerlackierung oder Steinschalgschutzgrundierung befinden.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzögen oder mit einer Grundierung versehen werden.

Geeignete Klarlacke für das Naß-in-naß-Verfahren sind Ein- oder Mehrkomponentenklarlacke, Pulverklarlacke, Pulverslurryklarlacke, UV-härtbare Klarlacke oder Sealer, wie sie aus den Patentanmeldungen, Patentschriften und Veröffentlichungen DE 42 04 518 A 1, EP 0 594 068 A1, EP 0 594 071 A 1, EP 0 594 142 A 1, EP 0 604 992 A 1, EP 0 596 460 A 1, WO 94/10211, WO 94/10212, WO 94/10213, WO 94/22969 oder WO 92/22615, US 5,474,811 A 1, US 5,356,669 A 1 oder US 5,605,965 A 1, DE 42 22 194 A 1, der ProduktInformation der Firma BASF Lacke + Farben AG, "Pulverlacke", 1990, der Firmenschrift von BASF Coatings AG "Pulverlacke, Pulverlacke für industrielle Anwendungen", Januar 2000, US 4,268,542 A 1; DE 195 40 977 A 1, DE 195 18 392 A 1, DE 196 17 086 A 1, DE-A-196 13 547, DE 196 52 813 A 1, DE-A-198 14 471 A 1, EP 0 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1, EP 0 002 866 A 1, DE 197 09 467 A 1, DE 42 03 278 A 1, DE 33 16 593 A 1, DE 38 36 370 A 1, DE 24 36 186 A 1, DE 20 03 579 B 1, WO 97/46549, WO 99/14254, US 5,824,373 A1, US 4,675,234 A 1, US 4,634,602 A 1, US 4,424,252 A 1, US 4,208,313 A 1, US 4,163,810 A 1, US 4,129,488 A1, US 4,064,161 A 1, US 3,974,303 A 1, EP 0 844 286 A 1, DE 43 03 570 A 1, DE 34 07 087 A 1, DE 40 11 045 A 1, DE 40 25 215 A1, DE 38 28 098 A 1, DE 40 20 316 A 1 oder DE 41 22 743 A 1 bekannt sind.

Die Applikation der erfindungsgemäßen Beschichtungsstoffe kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Die Applikationen kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des erfindungsgemäßen Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem jeweils applizierten Beschichtungsstoff selbst, betrieben wird.

Ist der erfindungsgemäße Beschichtungsstoff thermisch und mit aktinischer Strahlung härtbar, wird die Applikation bevorzugt bei Beleuchtung mit sichtbarem Licht einer Wellenlänge von über 550 nm oder unter Lichtausschluß durchgeführt. Hierdurch werden eine stoffliche Änderung oder Schädigung des erfindungsgemäßen Dual-Cure-Beschichtungsstoffs und des Overspray vermieden.

Im allgmeinen werden bei der Herstellung der erfindungsgemäßen effektgebenden Mehrschichtlackierungen die erfindungsgemäße Wasserbasislackschicht und die Klarlackschicht in einer Naßschichtdicke appliziert, daß nach ihrer Aushärtung Schichten mit der für ihre Funktionen notwendigen und vorteilhaften Schichtdicken resultieren; im Falle der Basislackierung liegen sie bei 5 bis 50, vorzugsweise 6 bis 40, besonders bevorzugt 7 bis 30 und insbesondere 8 bis 25 µm, und im Falle der Klarlackierungen liegen sie bei 10 bis 100, vorzugsweise 15 bis 80, besonders bevorzugt 20 bis 70 und insbesondere 25 bis 60 µm.

Sofern Elektrotauchlackschichten und Füllerlackschichten mit verwendet, liegen deren Schichtdicken im Falle der Elektrotauchlackierung bei 5 bis 50, vorzugsweise 6 bis 45, besonders bevorzugt 7 bis 40 und insbesondere 8 bis 35 µm und im Falle der Füllerlackierung bei 10 bis 150, vorzugsweise 10 bis 120, besonders bevorzugt 10 bis 100 und insbesondere 10 bis 90 µm.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der applizierten Schichten oder zum Verdunsten von flüchtigen Bestandteilen wie Lösemittel oder Wasser. Die Ruhezeit kann durch die Anwendung erhöhter Temperaturen bis 80°C unterstützt und/oder verkürzt werden, sofern hierbei keine Schädigungen oder Veränderungen der applizierten Schichten eintreten, PBT etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Die Härtung kann auch stufenweise durchgeführt werden. Sie erfolgt erfindungsgemäß bei Temperaturen von 60 bis 180°C vorzugsweise während einer Zeit von 1 min bis zu 2 h, besonders bevorzugt 2 min bis zu 1 h und insbesondere 3 min bis 30 min.

Auch die Härtung mit aktinischer Strahlung weist keine methodischen Besonderheiten auf, sondern erfolgt mit Hilfe von elektromagnetischer Strahlung wie nahes Infrarot, sichtbares Licht, UV-Strahlung oder Röntgenstrahlung, insbesondere UV-Strahlung, und/oder Korpuskularstrahlung wie Elektronenstrahlung. Vorzugsweise wird UV-Strahlung angewandt.

Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der applizierten Schichten gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Weitere Beispiele geeigneter Strahlenquellen werden in der deutschen Patentanmeldung DE 198 18 735 A 1, Spalte 10, Zeilen 31 bis 61, beschrieben. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise auch in R. Holmes, U.V. and E.B. Curing Formulations for Printing Inks, Coatings and Paints, SITA Technology, Academic Press, London, United Kindom, 1984, beschrieben.

Hierbei kann die Härtung stufenweise erfolgen, d. h. durch mehrfache Belichtung oder Bestrahlung mit aktinischer Strahlung. Dies kann auch alternierend erfolgen, d. h., daß beispielsweise abwechselnd mit UV-Strahlung und Elektronenstrahlung gehärtet wird.

Thermische Härtung und Härtung mit aktinischer Strahlung können gleichzeitig oder alternierend eingesetzt werden. Werden die beiden Härtungsmethoden alternierend verwendet, kann beispielsweise mit der Härtung mit aktinischer Strahlung begonnen und mit der thermischen Härtung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln.

Die aus den erfindungsgemäßen Beschichtungsstoffen hergestellten erfindungsgemäßen einschichtigen und mehrschichtigen effektgebenden Lackierungen, insbesondere die erfindungsgemäßen effektgebenden Mehrschichtlackierungen, weisen insgesamt die für den Einsatz in der Automobilserienlackierung erforderliche Qualität auf. So sind ihre
optischen Eigenschaften (Appearance) wie
- Glanz,
- Abbildungsunterscheidbarkeit (DOI),
- Deckvermögen,
- prägnante dichroitische optische Effekte,
ihre mechanische Eigenschaften wie
- Härte,
- Kratzfestigkeit,
- Abriebfestigkeit und
- Schlagfestigkeit,
ihre Haflungseigenschaften wie
- Zwischenschichthaftung und
- Haftung auf dem Substrat
sowie ihre chemischen Eigenschaften wie
- Witterungsbeständigkeit,
- UV- Beständigkeit,
- Beständigkeit gegenüber dem Weißanlaufen,
- Etch-Beständigkeit und
- Beständigkeit gegen Chemikalien (insbesondere Säuren und Basen), Lösemittel, Baumharz, Vogelkot und Benzin
auf einem so hohen Niveau, daß sie auch für die Lackierung von besonders hochwertigen Automobilen der Oberklasse in Betracht kommen.

Vor allem aber zeichnen sie sich durch eine hervorragende Gleichmäßigkeit des Farbtons in der Fläche aus und zeigen keine oder nur sehr wenige und kaum sichtbare Hell-Dunkel-Schattierungen oder Wolken.

Überraschenderweise tritt auch eine Verbesserung des Metalliceffekts in den farb- und/oder effektgebenden Mehrschichtlackierungen auf. Außerdem wird eine Erhöhung der Gasungsstabilität der Aluminiumeffektpigmente in den Beschichtungsstoffen erzielt. Darüber hinaus weisen die erfindungsgemäßen Basislackierungen der erfindunäsgemäßen Mehrschichtlackierungen eine bessere Kompatibilität zu dünnen Klarlackierungen auf. D. h., die erfindungsgemäßen Basislackierungen weisen keine oder nur sehr wenige senkrecht zur Oberfläche stehende Aluminiumeffektpigmente auf, die dünne Klarlackierungen durchstoßen und so zur Entstehung von Stippen führen können.

Insgesamt resultiert aufgrund der erfindungsgemäße Verwendung des neutralisierten Fettsäuregemisches eine sehr viel breitere Verwendbarkeit von nicht chromatierten Aluminiumeffektpigmenten

### Beispiele und Vergleichsversuche

### Herstellbeispiel 1

### Die Herstellung einer wäßrigen Polyurethandispersion

716,6 Gewichtsteile eines Kondensationproduktes (zahlenmittleres Molekulargewicht: 1410) aus 1,81 Mol einer polymeren Fettsäure (Dimerengehalt mindestens 98 Gew.-%, Trimerengehalt höchstens 2,0 Gew.-%, Monomerengehalt höchstens Spuren), 0,82 Mol Isophthalsäure, 0,61 Mol Hexandiol und 0,61 Mol Neopentylglykol, 61 Gewichtsteile Dimethylolpropionsäure, 10,6 Gewichtsteile Neopentylglykol, 365 Gewichtsteile Methylethylketon und 308,3 Gewichtsteile m-Tetramethylxylylidendüsocyanat wurden in einem geeigneten Reaktionsgefäß unter Rühren unter einer Stickstoffatmosphäre auf 80°C erhitzt. Die Reaktion wurde bis zu einem Isocyanatgehalt von 1,1 Gew.-%, bezogen auf die Gesamtmenge des Reaktionsgemischs, fortgeführt. Anschließend wurden 52,6 Gewichtsteile- Trimethylolpropan hinzugegeben, wonach die resultierende Reaktionsmischung so lange bei 80°C gerührt wurde, bis keine freien Isocyanatgruppen mehr nachweisbar waren. Danach wurden langsam 33 Gewichtsteile Dimethylethanolamin, 255 Gewichtsteile Butylglykol und anschließend 2153 Gewichtsteile deionisiertes Wasser eingerührt. Das Methylethylketon wurde unter Vakuum abdestilliert. Es resultierte eine feinteilige Dispersion, deren pH-Wert mit Dimethylethanolamin auf 7,4 und deren nicht flüchtiger Anteil mit deionisiertem Wasser auf 31 Gew.% eingestellt wurden.

### Herstellbeispiel 2

### Die Herstellung einer wäßrigen Polyesterharzlösung

In einem Reaktor, ausgerüstet mit Rührer, Thermometer und Füllkörperkolonne, wurden 729 Gewichtsteile Neopentylglykol, 768 Gewichtsteile Hexandiol, 462 Gewichtsteile Hexahydrophthalsäureanhydrid und 1710 Gewichtsteile einer polymeren Fettsäure (Dimerengehalt mindestens 98 Gew.-%, Trimerengehalt höchstens 2 Gew.-%, Monomerengehalt höchstens Spuren) eingewogen und zum Schmelzen gebracht. Die resultierende Schmelze wurde unter Rühren so aufgeheizt, daß die Kolonnenkopftemperatur 100 Grad Celsius nicht überstieg. Es wurde bei maximal mit 220°C so lange verestert, bis eine Säurezahl von 9 erreicht war. Nachdem Abkühlen auf 180°C wurden 768 Gewichtsteile Trimellithsäureanhydrid zugegeben und weiter verestert, bis eine Säurezahl von 32 erreicht war. Danach wurde die Reaktionsmischung auf 120 Grad Celsius abgekühlt und mit 1392 Gewichtsteilen Butylglykol angelöst. Nachdem Abkühlen auf 90°C wurden langsam 158 Gewichtsteile Dimethylethanolamin und anschließend 1150 Gewichtsteile deionisiertes Wasser eingerührt. Die resultierende Polyesterharzlösung wurde mit Dimethylethanolamin auf einen pH-Wert 7,6 und mit deionisiertem Wasser auf einen nichtflüchtigen Anteil von 60 Gew.-% eingestellt.

### Herstellbeispiel 3

### Die Herstellung eines polyurethanmodifizierten Polyacrylatharzes

500 Gewichtsteile eines Kondensationsproduktes (zahlemnittleres Molekulargewicht: 1423) aus 1,0 Mol einer polymeren Fettsäure (Dimerengehalt mindestens 98 Gew.-%, Dimerengehalt höchstens 2,0 Gew.-%, Monomerengehalt höchsten Spuren), 1,5 Mol Isophthalsäure, 1,6 Mol Neopentylglykol und 1,7 Mol Hexandiol, 31,2 Gewichtsteile Neopentylglykol, 185 Gewichtsteile Methylethylketon, 201,7 Gewichtsteile m-Tetramethylxylylidendiisocyanat und 0,7 Gewichtsteile Dibutylzinndilaurat wurden unter Rühren unter einer Stickstoffatmosphäre auf 80°C erhitzt. Die Reaktion wurde bis zu einem Isocyanatgehalt von 1,3 Gew.-%, bezogen auf die Gesamtmenge des Reaktionsgemischs, fortgeführt. Danach wurden 30 Gewichtsteile Diethanolamin zugegeben, und die resultierende Reaktionsmischung wurde bei 80°C so lange gerührt, bis keine Isocyanatgruppen mehr nachweisbar waren. Anschließend wurden 466 Gewichtsteile Butylglykol eingerührt, wonach das Methylethylketon im Vakuum abdestilliert wurde. Die resultierende Polyurethanlösung wurde anschließend mit Butylglykol auf einen nichtflüchtigen Anteil von 60 Gew.-% eingestellt.

In einem Stählkessel, ausgerüstet mit Monomerenzulauf, Initiatorzulauf, Thermometer, Ölheizung und Rückflußkühler wurden 28,44 Gewichtsteile Butylglykol und 24,24 Gewichtsteile der oben genannten Polyurethanlösung vorgelegt und auf 110°C aufgeheizt. Dann wurde eine Lösung von 5,1 Gewichtsteilen t-Butylperethylhexanoat in 6,0 Gewichtsteilen Butylglykol in einer solchen Geschwindigkeit gleichmäßig zugegeben, daß die Zugabe nach 5,5 Stunden abgeschlossen war. Mit dem Beginn der Initiatorzugabe wurde auch mit der Zugabe einer Mischung aus 18,36 Gewichtsteilen n-Butylmethacrylat, 17 Gewichtsteilen Methylmethacrylat, 17 Gewichtsteilen Laurylmethacrylat, 17,34 Gewichtsteilen Hydroxypropylacrylat und 12,75 Gewichtsteilen Styrol begonnen. Das Monomerengemisch wurde mit einer solchen Geschwindigkeit gleichmäßig zugegeben, daß die Zugabe in fünf Stunden abgeschlossen war. Nach dem die Initiatorlösung vollständig zugegeben war, wurde die Reaktionstemperatur noch während einer Stunde auf 110°C gehalten.

Im Anschluß daran wurde eine Lösung von 1,17 Gewichtsteilen t-Butylperethylhexanoat in 3,5 Gewichtsteilen Butylglykol in einer solchen Geschwindigkeit gleichmäßig zugegeben, daß die Zugabe nach 1,5 Stunden abgeschlossen war. Mit dem Beginn der Zugabe der Initiatorlösung wurde auch mit der Zugabe einer Mischung aus 5,85 Gewichtsteilen Acrylsäure und 4,65 Gewichtsteilen n-Butylmethacrylat, 2,94 Gewichtsteilen Methylmethacrylat, 5,90 Gewichtsteilen Laurylmethacrylat, 1,25 Gewichtsteilen Hydroxypropylacrylat und 2,94 Gewichtsteilen Styrol begonnen. Das Monomerengemisch wurde mit einer solchen Geschwindigkeit gleichmäßig zugegeben, daß die Zugabe innerhalb einer Stunde abgeschlossen war. Hiernach wurde die Temperatur des Reaktionsgemischs noch während 1,5 Stunden auf 110°C gehalten. Die resultierende Harzlösung wurde destillativ unter Vakuum auf 80 Gew.-% Festkörpergehalt aufkonzentriert und mit Dimethylethanolamin bei dieser Temperatur innerhalb von 30 Minuten bis zu einem Neutralisationsgrad von 80% neutralisiert. Die Harzlösung wurde auf 60°C abgekühlt, wonach die Heizung abgestellt wurde. Anschließend wurde langsam Wasser hinzugegeben, bis der Feststoffgehalt der Dispersion bei 40 Gew.-% lag. Die Dispersion wies eine Säurezahl von 36,7 mg KOH/g und einen pH-Wert von 7,6 auf.

### Herstellbeispiel 4

### Die Herstellung einer effektpigmenthaltigen Dispersion (I) (nicht erfmdungsgemäß)

Die Dispersion (I) wurde durch Vermischen von 3,0 Gewichtsteilen des handelsüblichen Aluminiumeffektpigments Alu-Stapa Hydrolux® VP 51284/G6, 1,8 Gewichtsteilen des handelsüblichen Aluminiumeffektpigments Alu-Stapa Hydrolux® 2154 (beide von der Firma Eckart), 6,0 Gewichtsteilen Butylglykol und 2,1 Gewichtsteilen der Polyesterharzlösung gemäß Herstellbeispiel 2 hergestellt.

### Herstellbeispiel 5

### Die Herstellung eines erfindungsgemäß zu verwendenden neutralisierten Fettsäuregemischs

7,5 Gewichtsteile Palmitinsäure, 7,5 Gewichtsteile Stearinsäure und 1,7 Gewichtsteile Ölsäure wurden bei 35 bis 60°C in 75 Gewichtsteilen eines Gemischs aus Solventnaphtha® und Butylglykol im Mischungsverhältnis von 3 : 1 gelöst und mit 9,5 Gewichtsteilen Di-n-butylamin, entsprechend 1,1 Equ. Base pro 1 Equ. Säure, neutralisiert.

### Herstellbeispiel 6

### Die Herstellung einer erfnidungsgemäß zu verwendenden effektpigmenthaltigen Dispersion (I)

Die Dispersion (I) wurde durch Vermischen von 3,0 Gewichtsteilen des handelsüblichen Aluminiumeffektpigments Alu-Stapa Hydrolux® VP 512841G6, 1,8 Gewichtsteilen des handelsüblichen Aluminiumeffektpigments Alu-Stapa Hydrolux® 2154 (beide von der Firma Eckart), 4,0 Gewichtsteilen Butylglykol, 4,0 Gewichtsteilen Isopropanol, 0,2 Gewichtsteilen des neutralisierten Fettsäuregemischs des Herstellbeispiels 5 und 2,1 Gewichtsteilen der Polyesterharzlösung gemäß Herstellbeispiel 2 hergestellt.

### Beispiel 1 und Vergleichsversuch V 1

### Die Herstellung eines erfindungsgemäßen (Beispiel 1) und eines nicht erfindungsgemäßen (Vergleichsversuch V 1) Wasserbasislacks

Der erfindungsgemäße und der nicht erfindungsgemäße Wasserbasislack wurden durch Vermischen der in der Tabelle 1 angegebenen Ausgangsprodukte in der angegebenen Reihenfolge hergestellt.

**Tabelle 1: Die stoffliche Zusammensetzung des erfindungsgemäßen (Beispiel 1) und des nicht erfindungsgemäßen (Vergleichsversuch V 1) Wasserbasislacks**

| **Ausgangsprodukt** | **Beispiel 1 Vergleichsvers. V 1** | |
|---|---|---|
| 1. Verdicker (3prozentiges Schichtsilikat, Laponite®) | 27,2 | 27,2 |
| Polyurethandispersion des Herstellbeispiels 1 | 22,1 | 22,1 |
| Polyesterharzlösung des Herstellbeispiels 2 | 2,0 | 2,0 |
| Polyurethanmodifiziertes Polyacrylatharz des Herstellbeispiels 3 | 3,9 | 3,9 |
| Butylglykol | 2,5 | 2,5 |
| Handelsübliches Melaminharzen in Butanol (Maprenal® VMF 3924 der Firma Hoechst | | |
| Butyl-Methyl-mischverethert) | 4,2 | 4,2 |
| Dimethylethanolamin, 10%ig in Wasser | 0,4 | 0,4 |
| 2-Ethyl-1-hexanol | 2,0 | 2,8 |
| Deionisiertes Wasser | 10,0 | 10,0 |
| 2. Verdicker (Verdicker auf der Basis von Polyurethan; Nopco® DSX 1550, 50%ig in Butylglykol; Firma Henkel) | 1,4 | 1,4 |
| Deionisiertes Wasser | 6,0 | 6,0 |
| Isopropanol | - | 3,0 |
| Butylenglykol | 3,0 | - |
| Dispersion (I) des Herstellbeispiels 4 | - | 12,9 |
| Dispersion (I) des Herstellbeispiels 6 | 13,1 | - |

Die Wasserbasislacke wurden auf eine Viskosität von 70 bis 90 mPas in einem Scherfeld von 1.000 s⁻¹ eingestellt.

Die Gasungsstabilität der Wasserbasislacke wurde wie folgt geprüft:

Jeweils 300 g der Wasserbasislacke des Vergleichsversuchs V 1 und des Beispiels 1 wurden in Gaswaschflaschen eingefüllt und auf 40°C erwärmt. Die Gaswaschflaschen wurden mit wassergefüllten 25 ml-Gasblasenzählern verschlossen und bei 40°C während 30 Tagen im Wasserbad gelagert. Nach dieser Zeit wurde das durch das entstandene Gas verdrängte Wasservolumen ermittelt. Bei dem Vergleichsversuch V 1 lag das Volumen bei 6 bis 8 ml, bei Beispiel 1 bei 3. ml. Somit wies der erfindungsgemäße-Wasserbasislack des Beispiels 1 eine signifikant höhere Gasungsstabilität auf als der Wasserbasislack des Vergleichsversuchs V 1.

### Beispiel 2 und Vergleichsversuch V 2

### Die Herstellung einer erfindungsgemäßen (Beispiel 2) und einer nicht erfindungsgemäßen (Vergleichsversuch V 2) effektgebenden Mehrschichtlackierung

Für das Beispiel 2 wurde der Wasserbasislack des Beispiels 1 verwendet.

Für den Vergleichversuch V 2 wurde der Wasserbasislack des Vergleichsversuchs V 1 verwendet.

Für die Prüfung der anwendungstechnischen Eigenschaften der Wasserbasislacke wurden in üblicher und bekannter Weise Prüftafeln der Abmessungen 30 x 70 cm hergestellt. Hierzu wurden Stahltafeln (Karosseriebleche), die mit einer üblichen und bekannten, kathodisch abgeschiedenen und eingebrannten Elektrotauchlackierung beschichtet worden waren mit einem handelsüblichen Füller der Firma BASF Coatings AG beschichtet, wonach die resultierende Füllerschicht während fünf Minuten bei 20°C und einer relativen Luftfeuchtigkeit von 65% abgelüftet und in einem Umluftofen während 30 Minuten bei 140°C eingebrannt wurde.

Nach dem Abkühlen der Prüftafeln auf 20°C wurden die Wasserbasislacke in zwei Spritzgängen appliziert. Die erste Auftrag erfolgt mittels ESTA (Glockendrehzahl: 45.000 U/min; Lenkluft:120 Nl/min; Spannung: 65KV; Abstand: 0,25 m; Ausflußmenge Lack: 170 ml/min), entsprechend einer Trockenfilmdicke von 8 bis 10 µm. Der zweite Auftrag erfolgte pneumatisch (Abstand: 0,32 m; Ausflußmenge Lack: 540 ml/min; Zerstäuberluft - Menge: 300 Nl/min; Zerstäuberluft - Druck: 4,8 bar; Hornluft - Druck: 5,2 bar; Hornluft - Menge: 395 Nl/min), entsprechend eine Trockenfilmdicke von 4 bis 6 µm. Die Wasserbasislackschichten wurden nach dem ersten und zweiten Auftrag jeweils während zwei Minuten abgelüftet.

Nach der Applikation wurden die Wasserbasislackschichten während 15 Minuten bei 80°C getrocknet, abgekühlt und mit einem handelsüblichen Zweikomponentenklarlack der Firma BASF Coatings AG überschichtet. Danach wurden die Wasserbasislackschichten und die Klarlackschichten während 30 Minuten bei 130°C eingebrannt, wodurch die erfindungsgemäße Mehrschichtlackierung des Beispiels 2 und die nicht erfindungsgemäße Mehrschichtlackierung des Vergleichsversuchs V 2 resultierten.

Die Prüftafeln wurden unter diffusem Licht aus einem Abstand von 2 bis 3 m in Aufsicht (80°) und in Schrägsicht (40°) hinsichtlich der Hell-Dunkel-Schattierung (Wolken) visuell beurteilt und benotet (Note 1: keine Wolken sichtbar; bis Note 5: Wolken sehr deutlich sichtbar).

Mit Hilfe eines handelsüblichen Farbmetrikmeßgeräts wurden die Helligkeitswerte bei verschiedenen Winkeln gemessen (MFD-Wert). Der MFD-Wert ist die Einheit des Metallic-Effekts (Flop).

Es wurden die folgenden Ergebnisse erhalten:

### Beispiel 2:

### Wolken (Aufsicht): 2; Wolken (Schrägsicht): 3; MFD-Wert: 77

### Vergleichsversuchs V 1:

### Wolken (Aufsicht): 3; Wolken (Schrägsicht): 5; MFD-Wert: 69

Somit zeigte der Wasserbasislack des Beispiels 2 signifikant weniger Hell-Dunkel-Schattierungen und einen besseren Flop als der Wasserbasislack des Vergleichsversuchs V 2 - und dies bei einer nur vergleichsweise geringfügigen Abwandlung der Zusammensetzung des erfindungsgemäßen Wasserbasislacks gegenüber dem Stand der Technik.

Trug man bei Beispiel 1 und Vergleichsversuch V 2 die Klarlacke als Keil mit steigender Schichtdicke auf, zeigte sich ein weiterer wesentlicher Unterschied zwischen der erfindungsgemäßen Mehrschichtlackierung des Beispiels 2 und der Mehrschichtlackierung des Vergleichsversuchs V 2. Während die Mehrschichtlackierung des Vergleichsversuchs V 2 im Bereich der dünnen Klarlackierungen (25 bis 35 µm) des Keils deutlich sichtbare Stippen aufwies, war dies bei der erfindungsgemäßen Mehrschichtlackierung des Beispiels 2 nicht der Fall. Dies rührte daher, daß in der Basislackierung der erfindungsgemäßen Mehrschichtlackierung des Beispiels 2 keine oder nur sehr wenige zur Ebene der Lackierung senkrecht stehende Aluminiumeffektpigment-Partikel enthalten waren. Solche senkrecht stehenden Partikel sind bekanntermaßen die Ursache von Stippen. Somit war die erfindungsgemäße Mehrschichtlackierung des Beispiels 1 der nicht erfindungsgemäßen Mehrschichtlackierung des Vergleichsversuchs V 2 in der Appearance deutlich überlegen.

## Patentansprüche

1. Wäßriger, effektgebender Beschichtungsstoff, enthaltend mindestens ein in Wasser lösliches oder dispergierbares Bindemittel,
- mindestens ein Effektpigment und
- ein neutralisiertes Gemisch aus mindestens zwei Fettsäuren.

2. Beschichtungsstoff nach Anspruch 1, **dadurch gekennzeichnet, daß** man als Effektpigmente Metallic-Effektpigmente verwendet.

3. Beschichtungsstoff nach Anspruch 1 oder 2, **dadurch gekennzeichnet, daß** man als Metallic-Effekipigmente Aluminiumeffektpigmente verwendet.

4. Beschichtungsstoff nach Anspruch 3, **dadurch gekennzeichnet, daß** man als Aluminiumeffektpigmente Leafing- und/oder Non-Leafing-Pigmente verwendet.

5. Beschichtungsstoff nach Anspruch 3 oder 4, **dadurch gekennzeichnet, daß** man Aluminiumeffektpigmente verwendet, die eine in wesentlichen runde Form und/oder eine im wesentlichen längliche Form haben.

6. Beschichtungsstoff nach einem der Ansprüche 1 bis 5, **dadurch gekennzeichnet, daß** man mindestens zwei Fettsäuren, ausgewählt aus der Gruppe bestehend aus den Fettsäuren mit 6 bis 30 Kohlenstoffatomen im Molekül, verwendet.

7. Beschichtungsstoff nach Anspruch 6, **dadurch gekennzeichnet, daß** man mindestens zwei Fettsäuren, ausgewählt aus der Gruppe bestehend aus Capronsäure, Önanthsäure, Caprylsäure, Pelargonsäure, Caprinsäure, Undedylsäure, Laurinsäure, Myristinsäure, Palmitinsäure, Stearinsäure, Ölsäure, Elaidinsäure, Arachinsäure, Behensäure, Lignocerinsäure, Cerotinsäure und Melissinsäure, verwendet.

8. Beschichtungsstoff nach Anspruch 6 oder 7, **dadurch gekennzeichnet, daß** man als Neutralisationsmittel mindestens eine Base, ausgewählt aus der Gruppe, bestehend aus primären, sekundären und tertiären, aromatischen, aliphatischen und cycloalipahtischen Mono- oder Poylaminen, Aminoalkoholen und Ammoniak, verwendet.

9. Beschichtungsstoff nach einem der Ansprüche 1 bis 8, **dadurch gekennzeichnet, daß** man einen Überschuß an Neutralisationsmittel anwendet.

10. Beschichtungsstoff nach einem der Ansprüche 1 bis 9, **dadurch gekennzeichnet, daß** man als in Wasser lösliche oder dispergierbare Bindemittel Polyurethane, Polyester und/oder polyurethanmodifizierte (Meth)Acrylatcopolymerisate verwendet.

11. Verfahren zur Herstellung des erfindungsgemäßen Beschichtungsstoffs gemäß einem der Ansprüche 1 bis 10, **dadruch gekennzeichnet**, **daß** man
(I) das Effektpigment oder die Effektpigmente in einem Gemisch, enthaltend
- mindestens ein wassermischbares organisches Lösemittel,
- mindestens ein in Wasser lösliches oder dispergierbares Bindemittel und
- ein neutralisiertes Gemisch aus mindestens zwei Fettsäuren;
dispergiert,
(II) wonach man die resultierende Dispersion (I) mit der wäßrigen Lösung oder Dispersion mindestens eines in Wasser löslichen oder dispergierbaren Bindemittels vereinigt.

12. Verwendung der Beschichtungsstoffe gemäß einem der Ansprüche 1 bis 10 und/oder der gemäß Anspruch 11 hergestellten Beschichtungsstoffe in der Automobilserienlackierung, Autoreparaturlackierung, der Lackierung von Bauwerken im Innen- und Außenbereich, der Lackierung von Türen, Fenstern und Möbeln sowie der industriellen Lackierung, inklusive Coil Coating, Container Coating und der Beschichtung elektrotechnischer Bauteile.

## Claims

1. Aqueous effect coating material comprising at least one water soluble or dispersible binder,
- at least one effect pigment, and
- a neutralized mixture of at least two fatty acids.

2. Coating material according to Claim 1, **characterized in that** metallic effect pigments are used as effect pigments.

3. Coating material according to Claim 1 or 2, **characterized in that** aluminium effect pigments are used as metallic effect pigments.

4. Coating material according to Claim 3, **characterized in that** leafing and/or non-leafing pigments are used as aluminium effect pigments.

5. Coating material according to Claim 3 or 4, **characterized in that** the aluminium effect pigments used have a substantially circular form and/or a substantially elongate form.

6. Coating material according to any of Claims 1 to 5, **characterized in that** at least two fatty acids selected from the group consisting of fatty acids having 6 to 30 carbon atoms in the molecule are used.

7. Coating material according to Claim 6, **characterized in that** at least two fatty acids selected from the group consisting of caproic acid, enanthic acid, caprylic acid, perlargonic acid, capric acid, undecylic acid, lauric acid, myristic acid, palmitic acid, stearic acid, oleic acid, elaidic acid, arachidic acid, behenic acid, lignoceric acid, cerotic acid, and melissic acid are used.

8. Coating material according to Claim 6 or 7, **characterized in that** at least one base selected from the group consisting of primary, secondary and tertiary, aromatic, aliphatic and cycloaliphatic monoamines and polyamines, amino alcohols, and ammonia is used as neutralizing agent.

9. Coating material according to any of Claims 1 to 8, **characterized in that** an excess of neutralizing agent is employed.

10. Coating material according to any of Claims 1 to 9, **characterized in that** polyurethanes, polyesters and/or polyurethane modified (meth)acrylate copolymers are used as water soluble or dispersible binders.

11. Process for preparing the coating material according to any of Claims 1 to 10, **characterized in that**
(I) the effect pigment or pigments are dispersed in a mixture comprising
- at least one water miscible organic solvent,
- at least one water soluble or dispersible binder, and
- a neutralized mixture of at least two fatty acids;
(II) the resulting dispersion (I) is combined with the aqueous solution or dispersion of at least one water soluble or dispersible binder.

12. Use of the coating material according to any of Claims 1 to 10 or of the coating material prepared according to Claim 11 in automotive OEM finishing, automotive refinish, the interior and exterior coating of constructions, the coating of doors, windows and furniture, and also industrial coating, including coil coating, container coating, and the coating of electrical components.

## Revendications

1. Matériau aqueux de revêtement à effets, contenant au moins un liant soluble ou dispersable dans l'eau,
- au moins un pigment à effets et
- un mélange neutralisé d'au moins deux acides gras.

2. Matériau de revêtement selon la revendication 1, **caractérisé en ce que** des pigments à effets métalliques sont utilisés en tant que pigments à effets.

3. Matériau de revêtement selon la revendication 1 ou 2, **caractérisé en ce que** des pigments à effets d'aluminium sont utilisés en tant que pigments à effets métalliques.

4. Matériau de revêtement selon la revendication 3, **caractérisé en ce que** des pigments pelliculants et/ou non pelliculants sont utilisés en tant que pigments à effets d'aluminium.

5. Matériau de revêtement selon la revendication 3 ou 4, **caractérisé en ce que** des pigments à effets d'aluminium ayant une forme essentiellement ronde et/ou une forme essentiellement oblongue sont utilisés.

6. Matériau de revêtement selon l'une quelconque des revendications 1 à 5, **caractérisé en ce qu'**au moins deux acides gras, choisis dans le groupe constitué des acides gras ayant 6 à 30 atomes de carbone par molécule, sont utilisés.

7. Matériau de revêtement selon la revendication 6, **caractérisé en ce qu'**au moins deux acides gras, choisis dans le groupe constitué de l'acide caproïque, de l'acide oenanthique, de l'acide caprylique, de l'acide pélargonique, de l'acide caprique, de l'acide undécylique, de l'acide laurique, de l'acide myristique, de l'acide palmitique, de l'acide stéarique, de l'acide oléique, de l'acide élaïdique, de l'acide arachinique, de l'acide béhénique, de l'acide lignocérique, de l'acide cérotique et de l'acide mélissique, sont utilisés.

8. Matériau de revêtement selon la revendication 6 ou 7, **caractérisé en ce qu'**au moins une base, choisie dans le groupe constitué des monoamines, ou des polyamines, aliphatiques et cycloaliphatiques, aromatiques, primaires, secondaires et tertiaires, des aminoalcools et de l'ammoniaque, est utilisée en tant que milieu de neutralisation.

9. Matériau de revêtement selon l'une quelconque des revendications 1 à 8, **caractérisé en ce qu'**un excédent de milieu de neutralisation est utilisé.

10. Matériau de revêtement selon l'une quelconque des revendications 1 à 9, **caractérisé en ce qu'**un polyuréthanne, un polyester et/ou un copolymérisat de (méth)acrylate modifié par polyuréthanne sont utilisés en tant que liant soluble ou dispersable dans l'eau.

11. Procédé pour la fabrication du matériau de revêtement selon la présente invention selon l'une quelconque des revendications 1 à 10, **caractérisé en ce que** :
(I) le pigment à effets ou les pigments à effets sont dispersés dans un mélange contenant :
- au moins un solvant organique soluble dans l'eau,
- au moins un liant soluble ou dispersable dans l'eau, et
- un mélange neutralisé d'au moins deux acides gras ;
(II) la dispersion résultante (I) est ensuite réunie avec la solution ou la dispersion aqueuse d'au moins un liant soluble ou dispersable dans l'eau.

12. Utilisation du matériau de revêtement selon l'une quelconque des revendications 1 à 10 et/ou du matériau de revêtement produit selon la revendication 11 dans la peinture automobile en série, la peinture en carrosserie automobile, la peinture de bâtiments en intérieur et en extérieur, le laquage des portes, fenêtres et meubles, ainsi que le laquage industriel, y compris le couchage sur bande, le couchage sur conteneur et le revêtement de pièces détachées électrotechniques.
